# EUROPEAN PATENT APPLICATION

(11) **EP 2 775 546 A1**
(43) Date of publication of application: **10.09.2014**
(21) Application number: 14157496.2
(22) Date of filing: 03.03.2014
(51) Int. Cl.: H01M 2/04

(54) **Exhaust structure of battery case**

(30) Priority: 08.03.2013 JP 2013047328
(71) Applicant: Mitsubishi Jidosha Kogyo K.K., Tokyo 108-8410 (JP); Mitsubishi Jidosha Engineering K.K., Aichi 444-8501 (JP)
(72) Inventor: Horii, Naoyuki, Tokyo, Tokyo 108-8410 (JP); Hiraiwa, Yoshio, Okazaki-shi, Aichi 444-8501 (JP)
(74) Representative: Vossius & Partner

(57) **Abstract**

An exhaust structure of a battery case, which structure prevents the entry of water, saves space, and simplifies amounting structure, is provided. The exhaust structure of a battery case (1) accommodating a plurality of batteries (4) characterized by : an exhaust vent through which exhaust within the battery case passes; and a cover member (12) covering the exhaust vent. The exhaust vent is composed of a plurality of openings (14) defined by tubular portions (13). The cover member is provided such that a first gap (32) is formed between the cover member and the tubular portions, and that second gaps (31) are formed between the cover member and the battery case.

## Description

This invention relates to an exhaust structure of a battery case.

An electrically driven vehicle such as an electric vehicle has so far been loaded with a battery unit composed of battery modules, each of which comprises a plurality of batteries (secondary batteries),andabattery caseaccommodatingthe battery modules. The battery unit is a unit for supplying electric power to a motor, and is installed in a cargo room or on the lower surface of a floor.

If an abnormality occurs in the battery, a gas may be evolved to expand the battery case. Thus, an exhaust vent for discharging the gas needs to be formed in the battery case. Since the battery unit is often installed under the floor, as mentioned above, the exhaust vent is required to have a configuration capable of preventing the entry of water.

An exhaust duct designed to prevent water from entering through the exhaust vent is known. The exhaust duct is fixed to a casing in an upright posture on the upper surface of the casing, as a U-shaped duct having a front end close to and opposed to the upper surface of the casing (see, for example, Japanese Patent No. 4039206).

According to the exhaust duct described in the above document, the entry of water may be preventable. However, the problems are involved that a space below the floor is too narrow to provide the upright duct of such a shape, and that a mounting structure for the duct is complicated.

The present invention has been accomplished in the light of the above-mentioned situations. It is an object of this invention to provide an exhaust structure of a battery case which structure prevents the entry of water, saves space, and simplifies a mounting structure.

An exhaust structure of a battery case according to the present invention is an exhaust structure of a battery case accommodating a plurality of batteries, characterized by: an exhaust vent through which exhaust within the battery case passes; and an exhaust vent cover member covering the exhaust vent, wherein the exhaust vent is composed of a plurality of openings defined by tubular portions, and the exhaust vent cover member is provided such that a first gap is formed between the exhaust vent cover member and the tubular portions, and that second gaps are formed between the exhaust vent cover member and the battery case.

With the exhaust structure of a battery case according to the present invention, the exhaust vent cover member is provided such that the first gap is formed between the exhaust vent cover member and the tubular portions, and that the second gaps are formed between the exhaust vent cover member and the battery case. Thus, the entry of water into the interior of the tubular portions, namely, the interior of the battery case, is prevented. Because of the structure having the cover, moreover, a space saving is achieved, and the mounting structure is simple. Furthermore, the exhaust vent is composed of the plurality of openings, thus providing a satisfactory exhaust efficiency.

The lower end surface of the exhaust vent cover member is preferably located below the upper end of the tubular portion. In this configuration, waterproofness can be enhanced further.

Preferably, the exhaust structure further comprises the mounting portion formed to protrude above the battery case, a plurality of the tubular portions are erected on the mounting portion to form the plurality of openings, and the wall of the mounting portion slopes upwards from the battery case toward the tubular portions. In this configuration, the exhaust within the battery case can be guided effectively to the tubular portions.

A preferred embodiment of the present invention is that a filter is provided between the upper end of the tubular portion and the cover member.

Preferably, the tubular portions are configured such that the total area of the openings is the same as the sum of the areas of the sides of imaginary columnar bodies each having a bottom which is the opening and having a height which is the height of the first gap. In this configuration, the highest exhaust efficiency can be obtained.

### [Effects of the Invention]

The exhaust structure of a battery case according to the present invention can exhibit the excellent effects of preventing the entry of water, saving space, and simplifying the mounting structure therefor.

In the following various embodiments of the invention will be described with reference to the drawings:
Fig. 1 is a perspective view of a battery case according to Embodiment 1.
Fig. 2 is a perspective view of essential parts of a battery cover in the battery case according to Embodiment 1.
Figs. 3A, 3B are a sectional view taken on line A-A of Fig. 2 (Fig. 3A), and a sectional view taken on line B-B of Fig. 2 (Fig. 3B).
Fig. 4 is an enlarged perspective view of essential parts for illustrating an imaginary columnar body.
Fig. 5 is a top view of the essential parts of the battery cover in the battery case according to Embodiment 1.
Fig. 6 is a top view of essential parts of a battery case according to another embodiment.
Fig. 7 is a top view of essential parts of a battery case according to still another embodiment.

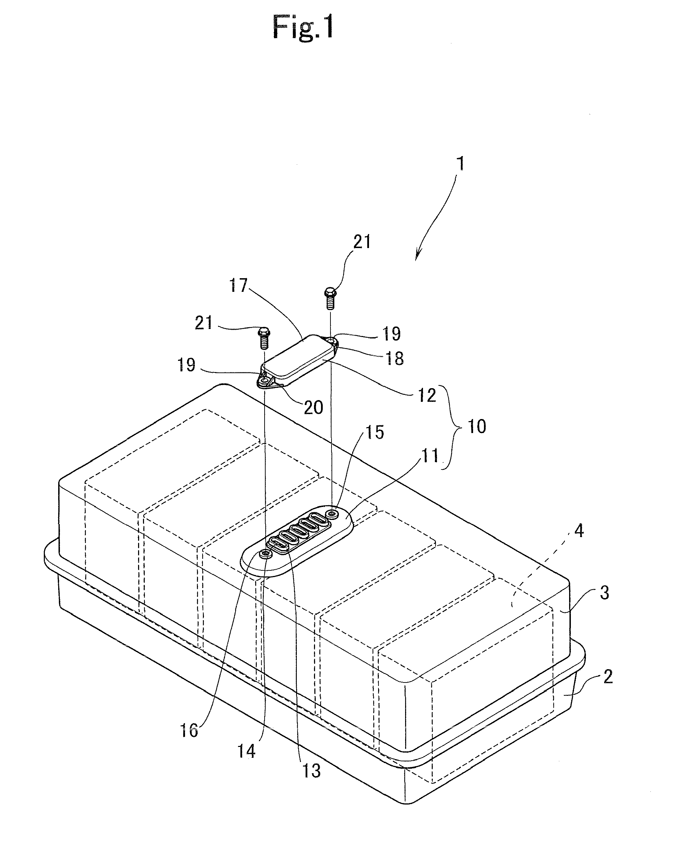

The exhaust structure of a battery case according to the present invention will be described with reference to Figs. 1 to 5.

A battery case 1 is installed, for example, under a floor panel of a vehicle. The battery case 1 is composed of a battery tray 2 and a battery cover 3. An internal space defined by the battery tray 2 and the battery cover 3 houses a plurality of battery modules 4 each of which is composed of a plurality of battery cells. On the upper surface of the battery cover 3 of the battery case 1, an exhaust unit 10 is provided for discharging exhaust gases from within the internal space of the battery case 1.

The exhaust unit 10 is provided integrally with the battery cover 3, and is composed of a mounting portion 11 formed to protrude slightly above the upper surface of the battery cover 3, and an exhaust vent cover (exhaust vent cover member) 12 for covering the upper surface of a central part of the mounting portion 11.

On the upper surface of the central part of the mounting portion 11, a protrusion 33 slightly protruding above is formed as will be described later in detail.

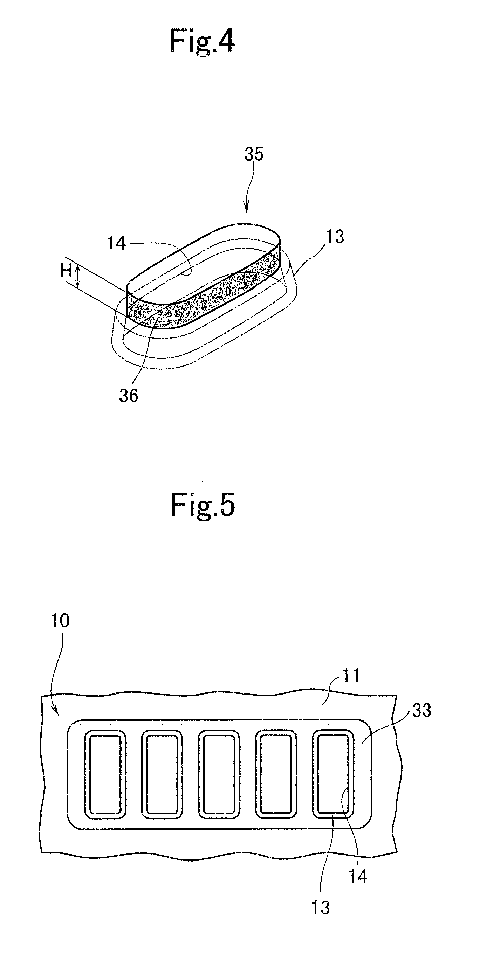

On the protrusion 33 on the upper surface of the central part of the mounting portion 11, a tubular portion 13 protruding further upwardly is erected. Concretely, a plurality (five in the present embodiment) of the tubular portions 13 are arranged side by side at spaced locations on the protrusion 33. The protrusion 33 is of a nearly rectangular shape elongated in a direction perpendicular to the direction of side-by-side arrangement of the battery modules 4 in a top view (see Figs. 1 and 5). Each tubular portion 13 is of a nearly rectangular shape elongated in the direction of side-by-side arrangement of the battery modules 4 in a top view (see Figs. 1 and 5). Each tubular portion 13 defines an opening 14. A plurality of the openings 14 constitute an exhaust vent through which exhaust within the battery case 1 passes.

Returning to Fig. 1, convexities 15 are formed at both ends of the mounting portion 11 in the direction of side-by-side arrangement of the tubular portions 13. Each convexity 15 is provided with a threaded hole 16.

The exhaust vent cover 12 is provided with a hollow box-shaped cover portion 17 covering the upper surface of the central part of the mounting portion 11, and a flange portion 18 extended in the longitudinal direction of the cover portion 17 from the peripheral edge of the cover portion 17. The cover portion 17 is rectangular as viewed in a top view, assumes the shape of a hollow box protruding upward, and opens on the lower surface side thereof. The flange portion 18 is provided with screw through-holes 19. The side surfaces of the cover portion 17 and the flange portion 18 are fixed together by ribs 20.

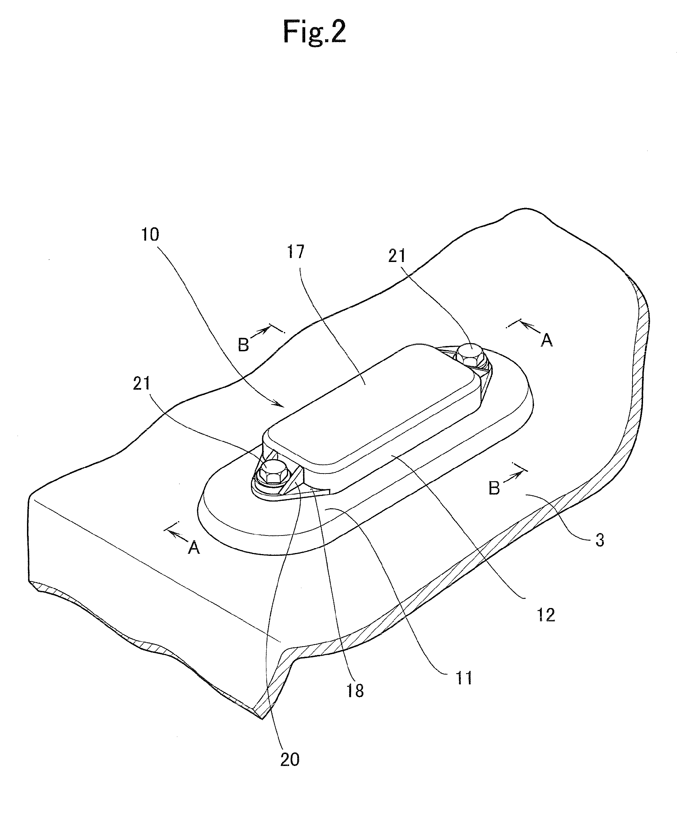

The exhaust vent cover 12 is fixed to the upper surface of the battery cover 3 by aligning the screw through-holes 19 of the flange portion 18 with the threaded holes 16 of the mounting portion 11 and screwing screws 21 into the threaded holes 16 (see Fig. 2). In this state, the upper end of the tubular portion 13 defining the opening 14 is located above the peripheral edge of the mounting portion 11. Moreover, the lower end surface of the exhaust vent cover 12 is located below the upper end of the tubular portion 13.

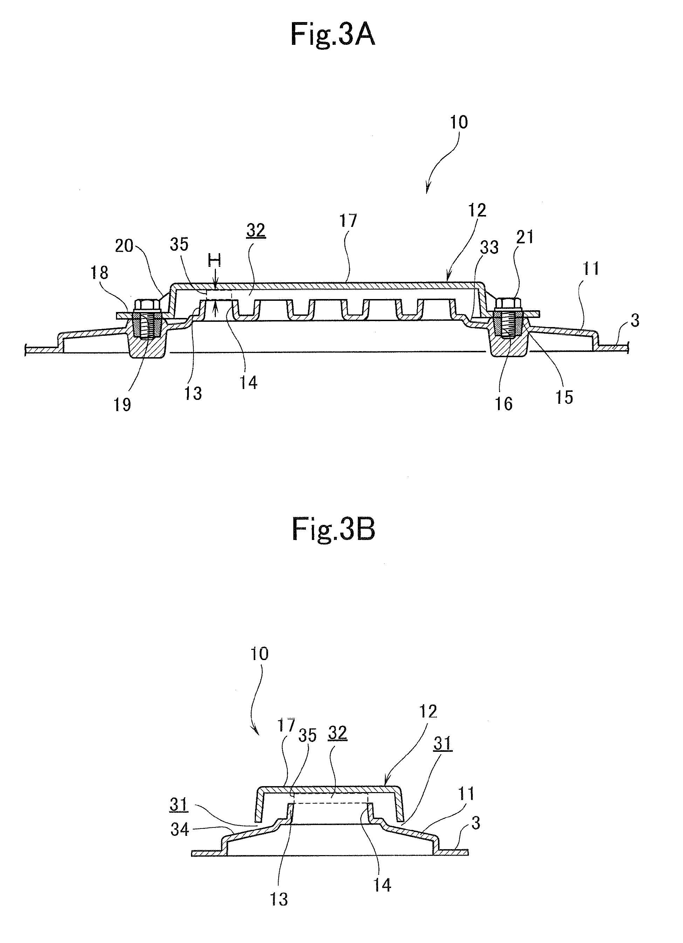

As noted above, the exhaust vent cover 12 is fixed to the mounting portion 11 only at two locations, i.e., a pair of the convexities 15. As a result, in regions other than the convexities 15, the exhaust vent cover 12 is supported in a state separated from the mounting portion 11. That is, as shown in Fig. 3A, the exhaust vent cover 12 is supported, at its opposite ends in the longitudinal direction, by the convexities 15. At both ends of the exhaust vent cover 12 in the lateral direction, gaps 31 (second gaps) are formed between the exhaust vent cover 12 and the mounting portion 11 (see Fig. 3B). Also, a gap 32 (first gap) is formed between the upper end of the tubular portion 13 and the exhaust vent cover 12.

Since the gap 32 is formed between the tubular portions 13 and the exhaust vent cover 12 and the gaps 31 are formed between the mounting portion 11 and the exhaust vent cover 12, exhaust within the battery case 1 can be discharged. That is, the exhaust discharged through the openings 14 passes through the gap 32, and then exits out of the battery case 1 through the gaps 31. In other words, the exhaust unit 10 forms the gaps 31, 32 serving as a path for discharging the gas within the battery case 1 to the outside.

With the exhaust unit 10 of the above configuration, even if water slips through the gap 31, the upper end of the tubular portion 13 defining the opening 14 is located above the lower end surface of the exhaust vent cover 12, in the interior of the exhaust vent cover 12. Thus, entry of water inward of the opening 14 is suppressed. Should the battery case be submerged in water, the entry of water into the interior of the exhaust vent cover 12 is suppressed by air pressure.

In the present embodiment, the plurality of openings 14 are formed by the plurality of tubular portions 13, whereby the area of each opening 14 is kept relatively small, and a desired opening area is ensured as a whole. By this procedure, the entry of water can be inhibited more reliably than when a single opening having a desired opening area is formed by the tubular portion 13.

According to the exhaust unit 10 of the present embodiment, as described above, the entry of water into the battery case 1 can be effectively suppressed by a simple configuration in which the exhaust vent cover 12 is fixed at the two locations by the screws 21. Moreover, the tubular portion 13, even when erected, need not be formed with a large length. Thus, the battery case 1 overall can be constituted in a compact configuration.

According to the exhaust unit 10 of the present embodiment, moreover, a relatively large discharge area is ensured for the gas evolved within the battery case 1, whereby discharge performance is enhanced. The gas discharged through the opening 14 of each tubular portion 13 passes through the gap 32 between the upper end of each tubular portion 13 and the exhaust vent cover 12, and then passes through the gaps 31. That is, the gap 32 functions as an exhaust passage through which the gas passes.

Concretely, as shown in Figs. 3A, 3B and Fig. 4, the gas passes through the side surface 36 (a gray part in Fig. 4) of an imaginary columnar body 35 present in the gap 32. That is, the region of the side surface 36 of the columnar body 34 functions as the exhaust passage for the gas. The imaginary columnar body 34 has the shape of the opening 14 as its bottom, and the height H of the gap 32 as its height. The larger the total area of the side surfaces 36 of the imaginary columnar bodies 35, the broader the exhaust passage for the gas in the gap 32 becomes.

In the present embodiment, the plurality of tubular portions 13 are provided. For the respective tubular portions 13, a plurality of the imaginary columnar bodies 35 constituting the exhaust passage are present. Thus, the total area of the side surfaces 36 of the imaginary columnar bodies 35 constituting the exhaust passage can be widened.

On the other hand, if a single tubular portion defining an opening having an area equal to the total area of the openings 14 of the plurality of tubular portions 13 is provided, for example, the amount of exhaust passing through this tubular portion is nearly the same as the amount of exhaust passing through the tubular portions 13 of the present embodiment. In this case, however, the area of the passage through which the gas passes, namely, the area of the side surface 36 of the above-mentioned imaginary columnar body 35, becomes smaller. Thus, exhaust discharge does not take place sufficiently, and the exhaust efficiency declines.

In this connection, it is conceivable to increase the height of the exhaust vent cover 12, thereby widening the gap 32 between the upper end of the tubular portion 13 and the exhaust vent cover 12 and increasing the exhaust efficiency thereby. However, this approach fails to fulfill the requirement for a compact configuration, and is not preferred. As shown in the present embodiment, therefore, it is preferred to widen the area of the exhaust passage by providing the plurality of tubular portions 13.

Increasing the height of the tubular portion 13 fails to satisfy the requirement for a compact configuration, but can obtain the effect of suppressing the entry of water. On the other hand, the increased height of the tubular portion 13 results in increased resistance in the tubular portion 13, thus posing the possibility of decreasing the exhaust efficiency. Thus, the height of the tubular portion 13 is preferably comparable to the one shown in the present embodiment.

In the present embodiment, an upper wall part 34 of the mounting portion 11 has an upward slope toward the base end of the tubular portion 13, as shown in Fig. 3B. That is, the upper wall part 34 of the mounting portion 11 slopes. Since the upper wall part 34 of the mounting portion 11 slopes upwards toward the base end of the tubular portion 13, as noted above, the exhaust within the battery case 1 is easily guided to the tubular portion 13.

In the present embodiment, moreover, a side wall part of the protrusion 33 also slopes upwards toward the base end of the tubular portion 13, as shown in Fig. 3A. Since the side wall part of the protrusion 33 slopes upwards toward the base end of the tubular portion 13, as mentioned above, the exhaust within the battery case 1 is easily guided to the tubular portion 13.

As described above, the exhaust unit 10 according to the present embodiment is configured to discharge the exhaust from the tubular portions 13 within the battery case 1 because of the mounting portion 11 and the protrusion 33.

In the present invention, moreover, the total area of the side surfaces 36 of the imaginary columnar bodies 35 corresponding to the respective tubular portions 13 is smaller than the total area of the openings 14 formed in the respective tubular portions 13. More preferably, the total area of the side surfaces 36 of the imaginary columnar bodies 35 is equated to the total area of the openings 14. By so doing, the exhaust efficiency can be further increased. If the total area of the openings 14 is larger than the total area of the side surfaces 36 which serve as the exhaust passage, the amount of the exhaust which can pass through the gap 32 is smaller than the amount of the exhaust passing through the openings 14 of the tubular portions 13, so that the exhaust efficiency lowers.

It is to be noted that increasing the number of the tubular portions 13, while narrowing the openings 14, in order to increase the total area of the side surfaces 36 of the imaginary columnar bodies 35 corresponding to the gap 32 is not preferred, because the total amount of the exhaust passing through the tubular portions 13 is not increased. The number of the tubular portions 13 and the total area of the openings 14 need to be determined, as appropriate, so that the sum of the circumferential lengths of the openings 14 of the respective tubular portions 13 will be increased, with the amount of the exhaust passing through the tubular portions 13 being ensured.

According to the present embodiment, as discussed above, the exhaust unit 10 can prevent the entry of water, and its mounting structure is simple. The entire battery case 1 takes up less space, and is optimal for installation, for example, under the floor of the vehicle.

The present invention is not limited to the above-described embodiment.

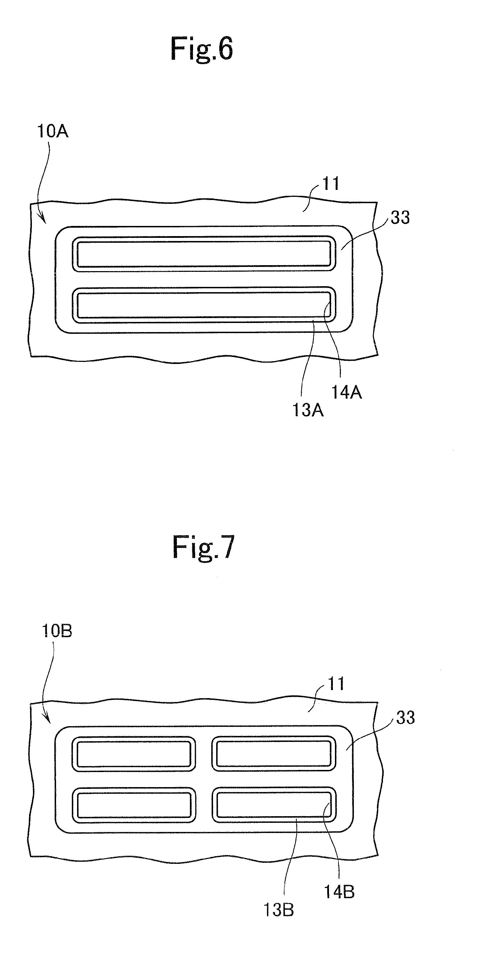

In the above embodiment, the tubular portion 13 constituting the exhaust unit 10 is in a nearly rectangular shape elongated in the direction of side-by-side arrangement of the battery modules 4 when viewed in a top view, but it is not limited to this configuration. As shown in Fig. 6, for example, an exhaust unit 10A may be provided with two tubular portions 13A having a longitudinal direction along a direction perpendicular to the direction of side-by-side arrangement of the battery modules 4 (see Fig. 1). Each tubular portion 13A defines an opening 14A in the same manner as in the aforementioned embodiment. As shown in Fig. 7, moreover, an exhaust unit 10B may be provided with a total of four tubular portions 13B which are arranged in two parallel rows in each of the direction of side-by-side arrangement of the battery modules 4 (see Fig. 1) and the direction perpendicular to the direction of side-by-side arrangement. It goes without saying that the tubular portion 13 need not be in a nearly rectangular shape when viewed in a top view. For example, the tubular portion 13 may be circular when viewed in a top view.

Furthermore, a filter may be provided between the tubular portions 13 and the exhaust vent cover 12. By this filter, the entry of water is further prevented, and an insect-repellent effect can be obtained.

In the foregoing embodiment, the respective tubular portions 13 have the same height, but this is not limitative. For example, of the plurality of tubular portions 13 arranged side by side, the heights of the tubular portions on both end sides may be relatively great as compared with the height of the tubular portions in the center. Concretely, grooves may be provided in parts of the mounting portion corresponding to the tubular portions on both end sides. In this configuration, the entry of water from the outside can be easily prevented, and the exhaust can be easily discharged.

Mounting of the exhaust vent cover 12 is not limited to the one shown in the above-described embodiment. For example, the exhaust vent cover 12 may be configured to be fixable by three or more of the screws 21.

In the present embodiment, the upper wall part 34 of the mounting portion 11 slopes upwards toward the center, but this is not limitative. A side wall part outward of the upper wall part 34 of the mounting portion 11 may slope upwards toward the center, and the upper wall part 34 and the side wall part may each slope, and constitute an inclined surface.

### Explanations of Letters or Numerals

- 1: Battery case
- 2: Battery tray
- 3: Battery cover
- 4: Battery module
- 10: Exhaust unit
- 11: Mounting portion
- 12: Exhaust vent cover
- 13: Tubular portion
- 14: Opening
- 15: Convexity
- 16: Threaded hole
- 17: Cover portion
- 18: Flange portion
- 19: Screw through-hole
- 20: Rib
- 21: Screw
- 31: Gap (second gap)
- 32: Gap (first gap)
- 33: Protrusion
- 34: Upper wall part
- 35: Imaginary columnar body

## Claims

1. An exhaust structure of a battery case (1) accommodating a plurality of batteries (4), **characterized by**:
an exhaust vent through which exhaust within the battery case passes; and
an exhaust vent cover member (12) covering the exhaust vent,
wherein the exhaust vent is composed of a plurality of openings (14) defined by tubular portions (13), and
the exhaust vent cover member is provided such that a first gap (32) is formed between the exhaust vent cover member and the tubular portions, and that second gaps (31) are formed between the exhaust vent cover member and the battery case.

2. The exhaust structure of a battery case (1) according to claim 1, **characterized in that**
a lower end surface of the exhaust vent cover member (12) is located below an upper end of the tubular portion (13).

3. The exhaust structure of a battery case (1) according to claim 1 or 2, further **characterized by**
a mounting portion (11) formed to protrude above the battery case (1),
wherein a plurality of the tubular portions (13) are erected on the mounting portion to form the plurality of openings (14), and
a wall (34) of the mounting portion slopes upwards from the battery case toward the tubular portions.

4. The exhaust structure of a battery case (1) according to any one of claims 1 to 3, **characterized in that**
a filter is provided between an upper end of the tubular portion (13) and the exhaust vent cover member (12).

5. The exhaust structure of a battery case (1) according to any one of claims 1 to 4, **characterized in that**
the tubular portions (13) are configured such that a total area of the openings (14) is identical with a sum of areas of sides (36) of imaginary columnar bodies (35) each having a bottom which is the opening and having a height which is a height (H) of the first gap (32).
